(19) Europäisches Patentamt / European Patent Office / Office européen des brevets

(11) **EP 3 650 475 B1**

(12) **EUROPEAN PATENT SPECIFICATION**

(45) Date of publication and mention
of the grant of the patent:
**12.04.2023 Bulletin 2023/15**

(21) Application number: **19772641.7**

(22) Date of filing: **12.03.2019**

(51) International Patent Classification (IPC):
*C08F 110/02* (2006.01)    *C08J 3/12* (2006.01)
*C08J 9/26* (2006.01)    *C08F 210/16* (2006.01)
*C08J 5/18* (2006.01)    *C08F 4/659* (2006.01)
*C08F 4/6592* (2006.01)

(52) Cooperative Patent Classification (CPC):
(C-Sets available)
**C08F 110/02; C08F 210/16; C08J 5/18;**
C08F 4/65908; C08F 4/6592; C08F 2410/06;
C08F 2420/04; C08J 2323/06      (Cont.)

(86) International application number:
**PCT/JP2019/010068**

(87) International publication number:
**WO 2019/207991 (31.10.2019 Gazette 2019/44)**

(54) **POLYETHYLENE POWDER, MOLDED BODY AND MICROPOROUS MEMBRANE**

POLYETHYLENPULVER, FORMKÖRPER UND MIKROPORÖSE MEMBRAN

POUDRE DE POLYÉTHYLÈNE, CORPS MOULÉ ET MEMBRANE MICROPOREUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2018 JP 2018083048**

(43) Date of publication of application:
**13.05.2020 Bulletin 2020/20**

(73) Proprietor: **Asahi Kasei Kabushiki Kaisha
Tokyo 1000006 (JP)**

(72) Inventor: **TANAKA, Kenya
Tokyo 1000006 (JP)**

(74) Representative: **D Young & Co LLP
120 Holborn
London EC1N 2DY (GB)**

(56) References cited:
**EP-A1- 3 279 225**    **JP-A- 2014 055 287**
**JP-A- 2015 180 716**    **JP-A- 2016 094 554**
**JP-A- 2017 141 312**    **US-A1- 2015 299 903**

EP 3 650 475 B1

(52) Cooperative Patent Classification (CPC): (Cont.)

C-Sets
**C08F 10/00, C08F 4/6567;**
**C08F 10/00, C08F 4/65912;**
C08F 110/02, C08F 2500/01, C08F 2500/18,
C08F 2500/20, C08F 2500/24;
C08F 210/16, C08F 210/08, C08F 2500/01,
C08F 2500/18, C08F 2500/20, C08F 2500/24

**Description**

Technical Field

The present invention relates to a polyethylene powder, a formed product, and a microporous membrane.

Background Art

Polyethylene is easily melt-processed. Polyethylene formed products, which have high mechanical strength and are excellent also in chemical resistance and rigidity, have been conventionally used as materials for a variety of applications including films, sheets, microporous membranes, fibers, foamed products, and pipes.
In particular, ultrahigh molecular weight polyethylene has high mechanical strength, is excellent in slidability and wear resistance, and is excellent also in chemical stability and long-term reliability, and thus has high practical applicability.
The ultrahigh molecular weight polyethylene has, however, a problem of low flowability even when the polyethylene is melted at a temperature equal to or higher than its melting point. Thus, as a method for forming the ultrahigh molecular weight polyethylene, there employed are a compression molding method in which a polyethylene powder is pressure-formed under heating conditions and then, the formed product is cut into a use form, a method in which the polyethylene is dissolved in a solvent such as liquid paraffin, then, the dissolved polyethylene is stretched, and formed into a sheet or string while the solvent is removed.
With respect to the method for compression molding a polyethylene powder, for example, disclosed is a technique of obtaining a compression-molded product excellent in strength, heat resistance, and wear resistance, using an ultrahigh molecular weight polyethylene powder having an intrinsic viscosity of 15 dl/g or more and 60 dl/g or less (see, e.g., Patent Literature 1).
Also disclosed is a technique of obtaining a compression-molded product excellent in forming processability and mechanical properties and not being colored by use of an ultrahigh molecular weight polyethylene powder having an average particle size of 50 $\mu$m or more and 200 $\mu$m or less and having a narrow particle size distribution (see, e.g., Patent Literature 2) .
US 2015/299903 A1 discloses a polyethylene powder for a fiber, wherein the intrinsic viscosity measured at 135° C. in decalin is 10 dL/g or higher and 40 dL/g or lower, the total amount of Al, Mg, Ti, Zr, and Hf is 1.0 ppm or higher and lower than 15 ppm, the amount of a particle having a particle size exceeding 355 um is 2.0% by mass or lower, and the amount of a particle having a particle size of 75 um or smaller is 3.0% by mass or higher and 50.0% by mass or lower.
EP 3 279 225 A1 discloses an ultra-high molecular weight ethylene-based copolymer powder comprising: an ethylene unit and an $\alpha$-olefin unit having 3 or more and 8 or less carbon atoms as structural units, wherein the ultra-high molecular weight ethylene-based copolymer powder has a viscosity-average molecular weight of 100,000 or more and 10,000,000 or less, a content of the $\alpha$-olefin unit is 0.01 mol% or more and 0.10 mol% or less based on a total amount of the ethylene unit and the $\alpha$-olefin unit, and in measurement with a differential scanning calorimeter under following conditions, an isothermal crystallization time is determined as a time from reaching 126°C of Step A3 as a starting point (0 min) to giving an exothermic peak top due to crystallization and the isothermal crystallization time is 5 minutes or more. (Conditions for measurement of isothermal crystallization time) Step A1: holding at 50°C for 1 minute and then an increase up to 180°C at a temperature rise rate of 10°C/min, Step A2: holding at 180°C for 30 minutes and then a decrease down to 126°C at a temperature drop rate of 80°C/min, and Step A3: holding at 126°C.
JP 2017 141312 A discloses an ultrahigh-molecular weight polyethylene particle having a viscosity average molecular weight (Mv) of 500,000 or more and 7,000,000 or less, a ratio (Mw/Mn) between a weight average molecular weight (Mw) and a number average molecular weight (Mn) of 4 or more and 7 or less, an average particle diameter of 50 um or more and 200 $\mu$m or less, and a standard deviation of particle diameter of 0.2 or less.

Citation List

Patent Literature

Patent Literature 1: Japanese Patent Laid-Open No. 2015-140386
Patent Literature 2: Japanese Patent Laid-Open No. 2017-141312

Summary of Invention

Technical Problem

Patent Literature 1 describes, however, merely adjusting the bulk density in respect of the properties of the polyethylene powder, and has a problem in that both the forming processability and the strength of the compression-molded product are not yet sufficient.

Patent Literature 2 describes merely improving the forming processability by controlling the particle size of the polyethylene powder to thereby improve the flowability, and has a problem in that it is difficult to impart sufficient mechanical properties to the formed product.

Accordingly, in view of the problems of the conventional art mentioned above, it is an object of the present invention to provide a polyethylene powder that inhibits generation of fine powder and coarse powder and is excellent in processability and additionally, a formed product excellent in dimensional accuracy.

Solution to Problem

The present inventors have made earnest studies to solve the above-described problems, resulting in a finding that a polyethylene powder having a predetermined average particle size and having a ratio of the compressive strength at the time of 10% displacement of particles having a particle size of 60 $\mu$m to the compressive strength at the time of 10% displacement of particles having a particle size of 100 $\mu$m within a particular numerical range can solve the above-described problems, and thus, the present invention has been accomplished.

Specifically, the present invention provides the following:

[1] A polyethylene powder having an average particle size of 70 $\mu$m or more and less than 150 $\mu$m wherein the average particle size is measured by the method described in paragraph [0042] of the description, wherein a compressive strength at a time of 10% displacement of particles having a particle size of 60 $\mu$m is 1.2 times or more and less than 2.5 times based on a compressive strength at a time of 10% displacement of particles having a particle size of 100 $\mu$m, wherein the particles having a particle size of 60 $\mu$m have an average value of the long side and the short side of 60 $\mu$m$\pm$5$\mu$m, wherein the particles having a particle size of 100 $\mu$m have an average value of the long side and the short side of 100 $\mu$m$\pm$5$\mu$m, wherein the compressive strength is determined from the average of three measurements obtained using a micro compression tester, and wherein the compressive strength is calculated in accordance with the following expression:

$$C(x) = 2.48 \times P/(\pi \times d \times d)$$

C(x): compressive strength at the time of 10% displacement (MPa)
P: test force at the time of 10% displacement of the particle size (N)
d: particle size of polyethylene powder for use in the compression test (mm).

[2] The polyethylene powder according to [1], having a viscosity average molecular weight (Mv) of 100,000 or more and 4,000,000 or less, wherein the viscosity average molecular weight (Mv) is measured by the method described in paragraph [0043] of the description.

[3] The polyethylene powder according to [1] or [2], wherein the compressive strength at the time of 10% displacement of particles having a particle size of 60 $\mu$m is 5.0 MPa or more and less than 15.0 MPa.

[4] The polyethylene powder according to any one of [1] to [3], wherein a content of particles having a particle size of more than 300 $\mu$m is less than 3.0% by mass, wherein the content of particles having a particle size of more than 300 $\mu$m is measured by the method described in paragraph [0045] of the description, and a content of particles having a particle size of less than 75 $\mu$m is 0.1% by mass or more and less than 10.0% by mass, wherein the content of particles having a particle size of less than 75 $\mu$m is measured by the method described in paragraph [0046] of the description.

[5] The polyethylene powder according to any one of [1] to [4], having a tap density of 0.50 g/cm$^3$ or more and 0.65 g/cm$^3$ or less, wherein the tap density is measured by the method described in JIS K-7370:2000.

[6] The polyethylene powder according to any one of [1] to [5], having an angle of rupture of 5° or more and less than 12°, wherein the angle of rupture is measured in compliance with JIS R 9301-2-2.

[7] The polyethylene powder according to any one of [1] to [6], having a melting heat amount $\Delta$H1 of 210 (J/g) or more and less than 240 (J/g) measured by a differential scanning calorimeter (DSC) and having a half value width of a melting peak Tm1 on a melting curve determined with a differential scanning calorimeter of 2.0°C or more and less than 6.0°C.

[8] The polyethylene powder according to any one of [1] to [7], having a total content of Ti and Al of 1 ppm or more and 10 ppm or less, wherein the total content of Ti and Al measured by the method described in paragraph [0050] of the description.

[9] A formed product of the polyethylene powder according to any one of [1] to [8].

[10] The formed product according to [9], being a microporous membrane.

Advantageous Effects of Invention

According to the present invention, it is possible to provide a polyethylene powder that inhibits generation of fine powder and coarse powder and is excellent in processability and a formed product excellent in dimensional accuracy.

Description of Embodiments

An embodiment for practicing the present invention (hereinafter also referred to as the "present embodiment") will now be described in detail.

[Polyethylene Powder]

A polyethylene powder of the present embodiment has an average particle size of 70 $\mu$m or more and less than 150 $\mu$m wherein the average particle size is measured by the method described in paragraph [0042] of the description, in which

the compressive strength at the time of 10% displacement of particles having a particle size of 60 $\mu$m is 1.2 times or more and less than 2.5 times based on the compressive strength at the time of 10% displacement of particles having a particle size of 100 $\mu$m, wherein the particles having a particle size of 60 $\mu$m have an average value of the long side and the short side of 60 $\mu$m$\pm$5$\mu$m, wherein the particles having a particle size of 100 $\mu$m have an average value of the long side and the short side of 100 $\mu$m$\pm$5$\mu$m, wherein the compressive strength is determined from the average of three measurements obtained using a micro compression tester, and wherein the compressive strength is calculated in accordance with the following expression:

$$C(x) = 2.48 \times P/(\pi \times d \times d)$$

C(x): compressive strength at the time of 10% displacement (MPa)
P: test force at the time of 10% displacement of the particle size (N)
d: particle size of polyethylene powder for use in the compression test (mm).

Polyethylene for the polyethylene powder of the present embodiment is not limited to the following, and suitable examples thereof include ethylene homopolymers and copolymers of ethylene and a different comonomer.

The different comonomer constituting the copolymer is not particularly limited, and examples include $\alpha$-olefins and vinyl compounds.

The $\alpha$-olefin is not limited to the following, and examples thereof include $\alpha$-olefins having 3 to 20 carbon atoms. Specific examples thereof include propylene, 1-butene, 4-methyl-1-pentene, 1-hexene, 1-octene, 1-nonene, 1-decene, 1-undecene, 1-dodecene, 1-tridecene, and 1-tetradecene.

The vinyl compound is not limited to the following, and examples thereof include vinyl cyclohexane, styrene, and derivatives thereof.

Furthermore, a nonconjugated polyene such as 1,5-hexadiene or 1,7-octadiene can be used as the different comonomer if necessary.

The copolymer of the ethylene and the different comonomer may be a random terpolymer.

One of the different comonomers may be singly used, or two or more of these may be used in combination.

An amount of the different comonomer in the copolymer is preferably 0.20 mol% or less, more preferably 0.15 mol% or less, further preferably 0.10 mol% or less based on the total copolymer as 100 mol%.

Setting the amount of the different comonomer to 0.2 mol% or less tends to allow the ratio of the compressive strength at the time of 10% displacement of particles having a particle size of 60 $\mu$m to the compressive strength at the time of 10% displacement of particles having a particle size of 100 $\mu$m to be in the range of 1.2 times or more and less than 2.5, to allow the compressive strength at the time of 10% displacement of particles having a particle size of 60 $\mu$m to be 5.0 MPa or more, and to be able to control the melting heat amount $\Delta$H1 measured by a differential scanning calorimeter (DSC) to be 210 J/g or more and less than 240 J/g and the half value width of a melting peak Tm1 on a melting curve obtained with a differential scanning calorimeter to be 2.0°C or more and less than 6.0°C.

Note that the amount of the comonomer in the copolymer can be checked by infrared analysis or NMR.

(Viscosity Average Molecular Weight)

The viscosity average molecular weight (Mv) of the polyethylene powder of the present embodiment is preferably 100,000 or more and 4,000,000 or less, more preferably 400,000 or more and 3,000,000 or less, further preferably 700,000 or more and 2,000,000 or less.

When the viscosity average molecular weight (Mv) is 100,000 or more, the strength of a formed product and a microporous membrane containing the polyethylene powder of the present embodiment tends to be further improved. Meanwhile, when the viscosity average molecular weight (Mv) is 4,000,000 or less, melt flowability, solubility in a solvent, and stretchability is improved, and thus, processability tends to be improved.

An exemplary method for controlling the viscosity average molecular weight (Mv) of the polyethylene powder within the above range is a method of adjusting the polymerization temperature of the reactor on polymerizing the polyethylene.

The viscosity average molecular weight (Mv) becomes lower as the polymerization temperature is raised, and becomes higher as the polymerization temperature is lowered.

Another exemplary method for controlling the viscosity average molecular weight (Mv) of the polyethylene powder within the above range is a method of adjusting an organic metal compound species as a promoter to be used on polymerizing the polyethylene. A chain transfer agent may be also added on the polymerization. Addition of the chain transfer agent as mentioned above tends to lower the viscosity average molecular weight of the polyethylene to be produced even at the same polymerization temperature.

The viscosity average molecular weight (Mv) of the polyethylene powder of the present embodiment can be obtained as follows: solutions of several types in which the polyethylene powder is dissolved in decalin at different concentrations are prepared, a solution viscosity at 135°C of each of the solutions is measured, a reduced viscosity calculated based on the thus measured solution viscosity is extrapolated to a concentration of 0 to determine a limiting viscosity, and a viscosity average molecular weight (Mv) is calculated using the value of the limiting viscosity $[\eta]$ (dL/g) in accordance with the expression B below.

More specifically, it is measured by a method described in Example in paragraph [0043].

$$Mv = (5.34 \times 10^4) \times [\eta]^{1.49} \qquad \text{Expression B}$$

A density of the polyethylene constituting the polyethylene powder of the present embodiment is not particularly limited, and is preferably 910 kg/cm³ or more and 980 kg/cm³ or less, more preferably 915 kg/m³ or more and 970 kg/cm³ or less, further preferably 920 kg/m³ or more and 965 kg/cm³ or less.

Adjusting the density of the polyethylene to 910 kg/cm³ or more and 980 kg/cm³ or less tends to allow the ratio of the compressive strength at the time of 10% displacement of particles having a particle size of 60 μm to the compressive strength at the time of 10% displacement of particles having a particle size of 100 μm to be 1.2 times or more and less than 2.5 times, to allow the compressive strength at the time of 10% displacement of particles having a particle size of 60 μm to be 5.0 MPa or more, and to be able to control the melting heat amount ΔH1 determined by a differential scanning calorimeter (DSC) to be 210 J/g or more and less than 240 J/g, and the half value width of a melting peak Tm1 on a melting curve obtained by a differential scanning calorimeter to be 2.0°C or more and less than 6.0°C.

Note that the density of the polyethylene can be measured in accordance with JIS K 7112 using a density measurement sample obtained by annealing a segment cut from a press sheet of a polyethylene powder at 120°C for 1 hour and then cooling the resultant at 25°C for 1 hour. The press sheet of the polyethylene powder can be produced by using a mold having a length of 60 mm, a width of 60 mm and a thickness of 2 mm in accordance with ASTM D 1928 Procedure C.

(Average Particle Size)

The average particle size of the polyethylene powder of the present embodiment is 70 μm or more and less than 150 μm, preferably 80 μm or more and less than 140 μm, more preferably 90 μm or more and less than 130 μm.

When the average particle size is 70 μm or more, the handling ability of the polyethylene powder becomes further excellent, and troubles in the polymerization step and the forming step tend to be reduced.

Meanwhile, when the average particle size is less than 150 μm, the solubility of the polyethylene powder in a solvent (e.g., liquid paraffin) becomes further satisfactory. A compression-molded product of the polyethylene powder of the present embodiment tends to have high strength and have excellent appearance properties.

Note that the average particle size of the polyethylene powder is measured by a method described in Example below in paragraph [0042].

The average particle size of the polyethylene powder can be controlled by appropriately adjusting the conditions in the polymerization step, for example, temperature and pressure of ethylene.

Specifically, raising the polymerization temperature and/or polymerization pressure can make the average particle size larger, and lowering the polymerization temperature and/or polymerization pressure can make the average particle size smaller.

(Compressive Strength at Time of 10% Displacement)

The compressive strength at the time of 10% displacement of the polyethylene powder having a particle size of 60 μm of the present embodiment is preferably 5.0 MPa or more and less than 15.0 MPa, more preferably 6.0 MPa or more and less than 14.0 MPa, further preferably 7.0 MPa or more and less than 13.0 MPa. Note that a particle size of 60 μm in the present embodiment refers to a particle size of 60 μm±5 μm.

The compressive strength at the time of 10% displacement refers to a value obtained by imparting a loading force (test force) to one polyethylene powder particle with an indenter, measuring the deformation amount (compression displacement), and determining the compressive strength at the time of 10% deformation.

When the compressive strength at the time of 10% displacement of the polyethylene powder having a particle size of 60 μm is 5.0 MPa or more, generation of fine powder caused by crushing and deformation of the polyethylene powder and generation of particle aggregates can be inhibited, and adhesion of the polyethylene powder to the reactor, clogging in piping, and reduction in the sieving efficiency can be inhibited. For example, when a solvent such as liquid paraffin and the polyethylene powder are kneaded in an extruder, there is a tendency that the polyethylene powder is dissolved efficiently and uniform gel can be produced in a short period.

Meanwhile, when the compressive strength at the time of 10% displacement of the polyethylene powder having a particle size of 60 μm is less than 15.0 MPa, in the case where filling and compression molding of the polyethylene powder are performed, deformation of the polyethylene powder facilitates fusion among polyethylene powder particles, and as a result, the mechanical strength of a formed product tends to increase.

Examples of a method for controlling the compressive strength at the time of 10% displacement of the polyethylene powder having a particle size of 60 μm to be 5.0 MPa or more and less than 15.0 MPa include methods such as employing continuous polymerization in which ethylene gas, a solvent, and a polymerization catalyst are continuously supplied to a polymerization system and continuously discharged along with polyethylene produced; introducing ethylene in a dissolved state in hexane at 10°C±5°C and further introducing ethylene from the gas phase portion to maintain a required pressure; and in the stage after drying for 0.5 hours, controlling the hexane content in the polyethylene powder to be 2% by mass or more and less than 5% by mass.

Note that the compressive strength of the polyethylene powder can be calculated in accordance with the following expression from the test force at the time of 10% displacement, which is determined from three measurements obtained using a micro compression tester MCT-510 manufactured by SHIMADZU CORPORATION under conditions: planer diameter of upper part pressurizing indenter: 200 mm, test force: 490.0 mN, and load speed: 4.842 mN/sec.

$$C(x) = 2.48 \times P/(\pi \times d \times d)$$

C(x): compressive strength at the time of 10% displacement (MPa)
P: test force at the time of 10% displacement of the particle size (N)
d: particle size of polyethylene powder for use in the compression test (mm)

(Compressive Strength Ratio)

In the polyethylene powder of the present embodiment, the ratio of the compressive strength at the time of 10% displacement of particles having a particle size of 60 μm to the compressive strength at the time of 10% displacement of particles having a particle size of 100 μm is 1.2 times or more and less than 2.5 times, preferably 1.4 times or more and less than 2.3 times, more preferably 1.6 times or more and less than 2.1 times.

Note that the particle size of 60 μm of the present embodiment refers to particles of 60 μm±5 μm, and the particle size of 100 μm refers to particles of 100 μm±5 μm.

When the ratio of the compressive strength is 1.2 times or more, it is possible to produce a formed product having a small forming strain and excellent in dimensional accuracy, in compression molding such as a ram extrusion method or press forming method. When the polyethylene powder is spread and compressed, the polyethylene powder is deformed to fill the gaps. Then, the polyethylene powder particles are fused to one another to develop the strength and wear resistance of the formed product. However, the forming strain remains usually due to excessive compression, resulting in problems of bending of the formed product and an occurrence of voids.

Use of a polyethylene powder in which a fine powder portion has higher compressive strength, like the polyethylene powder of the present embodiment, inhibits the compressive deformation of the fine powder, and the larger powder is preferentially deformed. Thus, the entire formed product is unlikely to be subjected to an occurrence of a forming strain. For this reason, a formed product excellent in dimensional accuracy with high strength of the formed product maintained tends to be obtained.

Conventionally, in the case of kneading a polyethylene powder and a solvent such as liquid paraffin in an extruder, a fine powder having a large surface area has been fused by collision among the powder particles in the process of kneading and dissolution and thus has been likely to be a start point of forming a powder mass. Thus, there has been a problem in that dissolution of the powder is inhibited and the extruding torque may be varied to results in an unstable discharge rate. For this reason, the membrane thickness of a formed product to be obtained by extrusion has been varied or the thread diameter of a thread-like formed product has been varied. There has also occurred a problem of adhesion of melted gel on the discharge port. Moreover, the powder remaining undissolved has caused a problem such as remaining of the unmelted powder on the membrane as the formed product or easily cutting the thread of the thread-like formed product.

In contrast, the polyethylene powder of the present embodiment, which is a powder in which a finer powder portion has higher compressive strength, can inhibit an occurrence of a powder mass and dissolve uniformly in a solvent. Thus, it is possible to obtain a formed product without powder remaining undissolved.

When the ratio of the compressive strength is less than 2.5 times, the polyethylene powder tends to be difficult to crush, to be moderately deformable, to have a high dissolution rate, and to be easy to handle.

An example of a method for controlling the ratio of the compressive strength at the time of 10% displacement of particles having a particle size of 60 $\mu$m to the compressive strength at the time of 10% displacement of particles having a particle size of 100 $\mu$m to be 1.2 times or more and less than 2.5 times is a method in which the powder is slowly grown while the activity in the initial stage of polymerization is inhibited in a uniform polymerization system, after polymerization, the reaction is stopped in an environment free of ethylene gas, and the solvent in the powder is gradually volatilized at a moderate rate.

More specific examples include methods such as employing continuous polymerization in which ethylene gas, a solvent, and a catalyst are continuously supplied to a polymerization system and continuously discharged along with a polyethylene powder produced; introducing ethylene in a dissolved state in hexane at 10°C±5°C and further introducing ethylene from the gas phase portion to maintain a required pressure; adjusting the flash tank to a temperature of 60°C±5°C and conduct bubbling with nitrogen gas; in the stage after drying for 0.5 hours, controlling the hexane content in the polyethylene powder to be 2% by mass or more and less than 5% by mass; setting the drying temperature in the final drying step to 100°C or more for 0.5 hours or more; and in this drying step, spraying steam to the polyethylene powder after polymerization to deactivate the catalyst and the promoter.

Usually, the compressive strength of the particle size in the vicinity of the average particle size of the polyethylene powder and the compressive strength of the particle size of the finer powder portion are comparable, but the polyethylene powder of the present embodiment is primarily characterized by being a polyethylene powder in which the compressive strength of the particle size of the finer powder portion is high.

(Content of Polyethylene Powder Having Particle Size More Than 300 $\mu$m)

The content of a polyethylene powder having a particle size of more than 300 $\mu$m in the polyethylene powder according to the present embodiment is preferably less than 3.0% by mass, more preferably 2.5% by mass or less, further preferably 2.0% by mass or less.

The lower limit of the content of the polyethylene powder having a particle size of more than 300 $\mu$m is not particularly limited, and is preferably as small as possible, more preferably 0% by mass.

When the content of the polyethylene powder having a particle size of more than 300 $\mu$m is less than 3.0% by mass, the solubility in a solvent of the polyethylene powder is improved, a uniform solution containing no unmelt can be obtained, and a formed product can be produced in a short period.

The content of such particles having a particle size of more than 300 $\mu$m can be controlled within the above numerical range by using a catalyst having a small particle size or a catalyst having a narrow particle size distribution, as a catalyst for use in polymerization of the polyethylene, or by removing a coarse particle portion in the catalyst by a filter. Alternatively, the control is enabled by adjusting the conditions on polymerizing the polyethylene. For example, it is possible to inhibit generation of particles having a particle size of more than 300 $\mu$m by lowering the polymerization pressure or reducing the retention time in the polymerization reactor. The control is also enabled by classifying the particles through a sieve after the polymerization and drying steps.

Note that the content of the polyethylene powder having a particle size of more than 300 μm can be determined by calculating the proportion of particles not passing through a sieve having an opening of 300 μm. The particles not passing through a sieve having an opening of 300 μm refers to the proportion of the mass of the particles remaining on a sieve having an opening of 300 μm or more with respect to the entire particles. Note that the content of the polyethylene powder having a particle size of more than 300 μm is measured by a method described in an example below in paragraph [0045].

(Content of Polyethylene Powder Having Particle Size Less Than 75 μm)

In the polyethylene powder of the present embodiment, the content of a polyethylene powder having a particle size of less than 75 μm is preferably 0.1% by mass or more and less than 10.0% by mass, more preferably 0.3% by mass or more and less than 9.0% by mass, further preferably 0.5% by mass or more and less than 8.0% by mass.
Such particulates are usually removed from the viewpoint of handleability, but a preferable aspect of the polyethylene powder of the present embodiment contains a particulate component.
When the content of the particles having a particle size of less than 75 μm is 0.1% by mass or more, in the step of dissolving the polyethylene powder in a solvent such as liquid paraffin, the particles having a particle size of less than 75 μm are dissolved in the solvent in a short period. Thus, the viscosity of the entire system is raised, and the solubility of the entire particles are facilitated. For this reason, unmelts tends to decrease.
Meanwhile, when the content of the polyethylene powder having a particle size of less than 75 μm is less than 10.0% by mass, in the step of dissolving the polyethylene powder in a solvent, the powder tends to be enabled to be uniformly dissolved in a short period while generation of masses of the powder is inhibited.
The content of such particles having a particle size of less than 75 μm can be controlled within the above numerical range by using a catalyst having a small particle size as a catalyst for use in polymerization of the polyethylene. Alternatively, the control is enabled by adjusting the conditions on polymerizing the polyethylene. For example, it is also possible to control the content of particles having a particle size of less than 75 μm by lowering the polymerization pressure or reducing the retention time in the polymerization reactor.
The content of the polyethylene particles having a particle size of less than particle size 75 μm can be determined as the proportion of the mass of the particles that have passed through a sieve having an opening of 75 μm with respect to the entire particles.
Note that the content of the polyethylene powder having a particle size of less than 75 μm is measured by a method described in an example below in paragraph [0046] .

(Tap Density)

The tap density of the polyethylene powder of the present embodiment is preferably 0.50 g/cm$^3$ or more and 0.65 g/cm$^3$ or less, more preferably 0.53 g/cm$^3$ or more and less than 0.63 g/cm$^3$, further preferably 0.55 g/cm$^3$ or more and less than 0.60 g/cm$^3$.
A powder containing aggregates and an irregular-shaped powder in a small amount and having a substantially spherical and regular surface structure has a higher tap density.
When the tap density is 0.50 g/cm$^3$ or more and 0.65 g/cm$^3$ or less, the powder is excellent in durability against an external stress, contains less irregular-shaped powder and powder aggregates having a different solubility, and is excellent also in flowability. For this reason, the handling ability, such as placing the polyethylene powder on a hopper, weighing the polyethylene powder from the hopper tends to be more satisfactory. The solubility of the entire polyethylene powder tends to be improved, and unmelts tend to be reduced because uniform solubility is exhibited.
A polyethylene powder having a tap density of 0.50 g/cm$^3$ or more and 0.65 g/cm$^3$ or less can be synthesized using a common catalyst such as a Ziegler-Natta catalyst or a metallocene catalyst, but catalysts described below are preferably used.
Reducing the amount of heat to be generated due to a rapid polymerization reaction, generated on producing a polyethylene powder, can also control the tap density within the above range.
Specifically, a rapid polymerization reaction of the polymerization system or a deposit onto the reactor wall tends to be reduced by employing continuous polymerization in which ethylene gas, a solvent, and a catalyst are continuously supplied to a polymerization system and continuously discharged along with polyethylene produced; introducing ethylene in a dissolved state in hexane at 10°C±5°C and introducing ethylene from the gas phase portion to maintain a required pressure; or slowly dissolving in the liquid. Thus, an irregular-shaped polyethylene powder and aggregates of the polyethylene powder can be reduced. Note that the tap density of the polyethylene is measured by the method described in JIS K-7370:2000.

(Angle of Rupture)

The angle of rupture of the polyethylene powder of the present embodiment is preferably 5° or more and less than 12°, more preferably 6° or more and less than 11°, further preferably 7° or more and less than 10°.

When the angle of rupture of the polyethylene powder is 5° or more, the powder has moderate flowability, and segregation of the particle size of the powder is unlikely to occur during storage and conveyance.

Meanwhile, the angle of rupture of the polyethylene powder is less than 12°, the powder is excellent in flowability and is unlikely to reside during air transport, clogging in the piping and hopper is inhibited, and uniform and dense filling can be achieved in a short period. For this reason, the powder is excellent in productivity and excellent also in forming processability.

Examples of controlling the angle of rupture of the polyethylene powder to be 5° or more and less than 12° include methods such as employing continuous polymerization in which ethylene gas, a solvent, and a catalyst are continuously supplied to a polymerization system and continuously discharged along with the polyethylene powder produced; and introducing ethylene in a dissolved state in hexane at 10°C±5°C and further introducing ethylene from the gas phase portion to maintain a required pressure. Note that the angle of rupture of the polyethylene powder is measured in compliance with JIS R 9301-2-2.

(Melting Heat Amount ∆H1)

The melting heat amount ∆H1 of the polyethylene powder of the present embodiment determined with a differential scanning calorimeter (DSC) is preferably 210 J/g or more and less than 240 J/g, more preferably 212 J/g or more and less than 228 J/g, further preferably 214 J/g or more and less than 226 J/g.

When the melting heat amount ∆H1 is 210 J/g or more, the compressive strength of the particles of the polyethylene powder tends to increase, and it is possible to extend the temperature range suitable for forming.

Meanwhile, when the melting heat amount ∆H1 is less than 240 J/g, the polyethylene powder is more likely to melt, and the forming time can be reduced. For this reason, the forming efficiency can be improved.

A method for controlling the melting heat amount ∆H1 of the polyethylene powder to be 210 J/g or more and less than 240 J/g is not particularly limited, and examples thereof include methods such as, in the case of preparing a copolymer of the polyethylene powder of the present embodiment with ethylene and a different comonomer using an α-olefin having 3 or more and 8 or less carbon atoms as the different comonomer, changing the type of the α-olefin having 3 or more and 8 or less carbon atoms; changing the copolymerization ratio with ethylene; raising the drying temperature in the drier in the drying treatment step after the polymerization step; and extending the retention time in the dryer.

Note that the melting heat amount ∆H1 can be measured by a method described in an example below.

(Tm1 Half Value Width)

The half value width of a melting peak Tm1 on a melting curve of the polyethylene powder of the present embodiment determined with a differential scanning calorimeter (DSC) is preferably 2.0°C or more and less than 6.0°C, more preferably 2.5°C or more and less than 5.7°C, further preferably 3.0°C or more and less than 5.5°C.

When the half value width of the melting peak Tm1 is 2.0°C or more, melting of the polyethylene powder is easily controlled, and temperature change caused by abrupt melting can be inhibited.

Meanwhile, when the half value width of Tm1 is less than 6.0°C, the powder tends to easily melt uniformly.

In the polyethylene powder of the present embodiment, a method of controlling the half value width of the melting peak Tm1 to be 2.0°C or more and less than 6.0°C is not particularly limited, and examples thereof include methods such as employing continuous polymerization in which ethylene gas, a solvent, and a catalyst are continuously supplied to a polymerization system and continuously discharged along with the polyethylene powder produced; and introducing ethylene in a dissolved state in hexane at 10°C±5°C and further introducing ethylene from the gas phase portion to maintain a required pressure. The half value width of the melting peak Tm1 is an indicator representing the uniformity of the melting behavior. Thus, the polymerization reaction proceeds uniformly and the half value width of the melting peak Tm1 tends to be decreased by eliminating non-uniformity of the temperature in the polymerization system. Note that the half value width of the melting peak Tm1 can be measured by a method described in an example below.

(Total Content of Ti and Al)

In the polyethylene powder of the present embodiment, the total content of Ti and Al is preferably 1 ppm or more and 10 ppm or less, more preferably 1.1 ppm or more and 9.0 ppm or less, further preferably 1.2 ppm or more and 8.0 ppm or less.

When the total content of Ti and Al is 1.0 ppm or more, the compressive strength at the time of 10% displacement of the polyethylene powder having a particle size of 60 μm tends to be 5.0 MPa or more and less than 15.0 MPa. Meanwhile when the total content of Ti and Al is 10.0 ppm or less, the polyethylene is scarcely colored, and when the polyethylene is formed, there is a tendency that degradation of the polyethylene is inhibited, embrittlement, discoloration, degradation in mechanical properties, and increase in unmelts are more unlikely to occur, and long-term stability is excellent. Further, a clean formed product containing little metal foreign matter tends to be obtained.

The total content of Ti and Al in the polyethylene powder of the present embodiment can be controlled within the above numerical range by adjusting the productivity of the polyethylene powder per unit catalyst.

The productivity of the polyethylene powder can be controlled in accordance with a polymerization temperature, a polymerization pressure and a slurry concentration in a polymerization reactor used in the production. In other words, in order to increase the productivity of the polyethylene powder of the present embodiment, the polymerization temperature is raised; the polymerization pressure is raised and/or the slurry concentration is raised, for example.

A catalyst to be used is not particularly limited, and examples thereof include common Ziegler-Natta catalysts and metallocene catalysts. Besides, Ti and Al can be removed from the polyethylene powder also by a method such as separating the polyethylene powder from the solvent by a centrifugation method and setting the amount of the solvent contained in the polyethylene powder before drying treatment to 70% by mass or less with respect to the mass of the polyethylene powder; deactivating the catalyst after separating the solvent as much as possible by a centrifugation method; or washing the polyethylene powder with water or a weak acidic aqueous solution, and the total content of Ti and Al can controlled within the above numerical range by these methods.

Note that the total content of Ti and Al in the polyethylene powder is measured by a method described in an example below in paragraph [0050].

(Method for Producing Polyethylene Powder)

The polyethylene powder of the present embodiment can be produced by employing a conventionally known polymerization method. Examples of the polymerization method include, but are not limited to, methods of polymerizing ethylene or copolymerizing ethylene with a different monomer by a slurry polymerization method, a gas phase polymerization method, or a solution polymerization method.

Particularly, the slurry polymerization method in which heat of polymerization can be efficiently removed is preferred. In the slurry polymerization method, an inert hydrocarbon solvent can be used as a solvent, and besides, an olefin itself can be used as the solvent.

The inert hydrocarbon solvent is not particularly limited, and examples thereof include aliphatic hydrocarbons such as propane, butane, isobutane, pentane, isopentane, hexane, heptane, octane, decane, dodecane, and kerosene; alicyclic hydrocarbons such as cyclopentane, cyclohexane, and methyl cyclopentane; aromatic hydrocarbons such as benzene, toluene, and xylene; halogenated hydrocarbons such as ethyl chloride, chlorobenzene, and dichloromethane; and mixtures thereof.

In the polymerization step of the polyethylene powder, an inert hydrocarbon solvent having 6 or more and 10 or less carbon atoms is preferably used. When the inert hydrocarbon solvent has 6 or more carbon atoms, a low molecular weight component generated in a side reaction occurring in ethylene polymerization or in degradation of the polyethylene is relatively easily dissolved therein, and thus, can be easily removed in a step of separating the polyethylene from the polymerization solvent.

Meanwhile, when the inert hydrocarbon solvent has 10 or less carbon atoms, there is a tendency that an industrially stable operation can be performed with adhesion of the polyethylene powder to the polymerization reactor inhibited.

In the polymerization step of the polyethylene powder, it is preferred that ethylene be dissolved in the inert hydrocarbon solvent in advance and the resultant solvent be adjusted to 10°C±3°C and introduced into the polymerization system.

When the introduction temperature of the inert hydrocarbon solvent in which ethylene has been dissolved is set to 10°C±3°C, an abrupt reaction can be inhibited, and the polymerization system tends to be more stabilized.

The polymerization temperature in the method for producing the polyethylene powder of the present embodiment is usually preferably 30°C or more and 100°C or less, more preferably 35°C or more and 95°C or less, further preferably 40°C or more and 90°C or less. When the polymerization temperature is 30°C or more, there is a tendency that the production can be industrially efficiently performed. Meanwhile, when the polymerization temperature is 100°C or less, there is a tendency that a stable operation can be continuously performed.

The polymerization pressure in the method for producing the polyethylene powder is usually preferably normal pressure or more and 2.0 MPa or less, more preferably 0.1 MPa or more and 1.5 MPa or less, further preferably 0.1 MPa or more and 1.0 MPa or less.

The polymerization reaction can be performed by any of a batch method, a semi-continuous method, and a continuous method, and in particular, the continuous method is preferably employed for the polymerization.

When the ethylene gas, the solvent, and the catalyst are continuously supplied to the polymerization system and the ethylene gas, the solvent, and the catalyst are continuously discharged together with the polyethylene powder produced, an occurrence of a partial high-temperature state otherwise caused by a rapid ethylene reaction can be inhibited, and the polymerization system tends to be more stabilized.

In the method for producing the polyethylene powder, it is preferred that the polymerization be divided in two or more stages having different reaction conditions and then performed.

In the method for producing the polyethylene powder of the present embodiment, a catalyst component may be used. The catalyst component is not particularly limited, and suitable examples thereof include Ziegler-Natta catalysts, metallocene catalysts, and Phillips catalysts.

As the Ziegler-Natta catalysts, those described in Japanese Patent No. 5767202 can be suitably used, and as the metallocene catalysts, for example, those described in Japanese Patent Laid-Open No. 2006-273977 and Japanese Patent No. 4868853 can be suitably used although not limited to these.

Besides, the catalyst component to be used in the step of producing the polyethylene powder of the present embodiment may contain a co-catalyst such as triisobutylaluminum or a Tebbe reagent.

The average particle size of the catalyst mentioned above is preferably 0.1 $\mu$m or more and 20 $\mu$m or less, more preferably 0.2 $\mu$m or more and 16 $\mu$m or less, further preferably 0.5 $\mu$m or more and 12 $\mu$m or less. When the average particle size of the catalyst is 0.1 $\mu$m or more, there is a tendency that a problem of scattering and adhesion of the polyethylene powder to be obtained can be prevented. Besides, when the average particle size of the catalyst is 20 $\mu$m or less, there is a tendency that a problem in that the polyethylene powder becomes excessively large to precipitate in the polymerization system, and a problem in that clogging of a line in a post-treatment step of the polyethylene powder is induced can be prevented.

A particle size distribution of the catalyst is preferably as narrow as possible, and fine powder and coarse powder also can be removed by sieving, centrifuging, or cycloning.

In the method for producing the polyethylene powder of the present embodiment, with respect to an introduction temperature of the catalyst, the catalyst is preferably cooled to 10°C±3°C before introduction. When the introduction temperature of the catalyst is set to 10°C±3°C, an abrupt reaction at the initial stage of the introduction in which the activity of the catalyst is the highest can be inhibited, and there is a tendency that the polymerization system is more stabilized.

A method for deactivating the catalyst used in the step of producing the polyethylene powder is not particularly limited, and a deactivation step is preferably performed after the polyethylene powder is separated from the solvent. When an agent for deactivating the catalyst is placed after the separation from the solvent, precipitation of the catalyst component dissolved in the solvent can be inhibited, and Ti, Al, and chlorine derived from the catalyst component can be reduced. Examples of the agent for deactivating the catalyst include, but are not limited to, oxygen, water, alcohols, glycols, phenols, carbon monoxide, carbon dioxide, ethers, carbonyl compounds, and alkynes.

In the method for producing the polyethylene powder of the present embodiment, it is preferred that hexane including ethylene dissolved therein be introduced in a cooled state and an ethylene gas be introduced from the gas phase portion present in the upper portion of the polymerization reactor.

An ethylene gas is introduced from a liquid phase of a polymerization reactor in a common conventionally known method. When an ethylene concentration in the vicinity of an outlet of the ethylene introduction line becomes high, an abrupt ethylene reaction is more likely to occur. For this reason, in the method for producing the polyethylene powder of the present embodiment, it is preferred that hexane including ethylene dissolved therein be introduced in a cooled state and an ethylene gas be introduced into the gas phase portion.

The molecular weight of the polyethylene can be controlled, as described in West Germany Patent Application Publication No. 3127133, by allowing hydrogen to be present in the polymerization system, or by employing a method of changing the polymerization temperature. When hydrogen is added as a chain transfer agent to the polymerization system, the molecular weight can be easily controlled within an appropriate range. When hydrogen is added to the polymerization system, a mole fraction of the hydrogen is preferably 0 mol% or more and 30 mol% or less, more preferably 0 mol% or more and 25 mol% or less, further preferably 0 mol% or more and 20 mol% or less.

Also from the viewpoint of controlling the viscosity average molecular weight (Mv) of the polyethylene powder of the present embodiment, it is preferred that hexane including ethylene dissolved therein be introduced in a cooled state and an ethylene gas be introduced from the gas phase portion present in the upper portion of the polymerization reactor. A concentration of hydrogen with respect to ethylene in the gas phase portion is preferably 1 to 10,000 ppm, more preferably 10 to 7,000 ppm, further preferably 30 to 6,000 ppm.

In the method for producing the polyethylene powder of the present embodiment, the polyethylene powder is separated from the solvent.

Examples of a method for separating the polyethylene powder from the solvent include decantation, centrifugation, and filtration methods. From the viewpoint of high efficiency of separation of the polyethylene powder from the solvent, the centrifugation method is preferred.

An amount of the solvent contained in the polyethylene powder after the separation of the solvent is not particularly limited, and is preferably 70% by mass or less, more preferably 60% by mass or less, further preferably 50% by mass or less with respect to the mass of the polyethylene powder.

When the content of the solvent contained in the polyethylene powder is set to 70% by mass or less, catalyst residues such as Al, Ti, and chlorine contained in the solvent are unlikely to remain in the polyethylene powder, and additionally, the low molecular weight component in the polyethylene powder can be reduced.

In the method for producing the polyethylene powder of the present embodiment, drying treatment is preferably performed after separation of the solvent.

A temperature in the drying treatment is preferably 85°C or more and 150°C or less, more preferably 95°C or more and 140°C or less, further preferably 105°C or more and 130°C or less.

When the drying temperature is 85°C or more, the drying can be efficiently performed. Meanwhile, when the drying temperature is 150°C or less, the drying treatment can be performed while aggregation and thermal deterioration of the polyethylene powder are inhibited.

Also in the present embodiment, in the stage after drying for 0.5 hours, it is preferred to control the content of hexane in the polyethylene powder to be 1% by mass or more and less than 5% by mass and to perform drying by finally setting the drying temperature to 100°C or more for 0.5 hours or more.

Controlling the content of hexane in the polyethylene powder to be 1% by mass or more and less than 5% by mass in the stage after drying for 0.5 hours and performing drying by setting the final drying temperature to 100°C or more for 0.5 hours or more enable falling-rate drying to be performed after a sufficient constant-rate drying period is taken. In this case, there is a tendency that the polyethylene powder is difficult to crush and generation of fine powder can be inhibited. Additionally, there is a tendency that it is possible to adjust the compressive strength at the time of 10% displacement of the polyethylene powder having a particle size of 60 $\mu$m to 5.0 MPa or more and less than 15.0 and it is possible to adjust the ratio of the compressive strength at the time of 10% displacement of particles having a particle size of 60 $\mu$m to the compressive strength at the time of 10% displacement of particles having a particle size of 100 $\mu$m within the range of 1.2 times or more and less than 2.5 times.

(Additives)

The polyethylene powder of the present embodiment can contain, in addition to the components described above, other known components useful for the production of the polyethylene powder.

The polyethylene powder of the present embodiment may further contain, for example, additives such as a neutralizer, an antioxidant, and a light stabilizer.

The neutralizer is used as a catcher for chlorine contained in the polyethylene, or a forming aid. The neutralizer is not particularly limited, and examples include stearates of alkaline earth metals such as calcium, magnesium, and barium. The content of the neutralizer is not particularly limited, and is preferably 5,000 ppm or less, more preferably 4,000 ppm or less, further preferably 3,000 ppm or less with respect to the total amount of the polyethylene. Alternatively, the neutralizer may not be used.

The antioxidant is not particularly limited, and examples thereof include phenol-based antioxidants such as dibutylhydroxytoluene, pentaerythrityl tetrakis[3-(3,5-di-t-butyl-4-hydroxyphenyl)propionate], and octadecyl 3-(3,5-di-t-butyl-4-hydroxyphenyl)propionate. The content of the antioxidant is not particularly limited, and is preferably 5,000 ppm or less, more preferably 4,000 ppm or less, further preferably 3,000 ppm or less. Alternatively, the antioxidant may not be used.

The light stabilizer is not particularly limited, and examples thereof include benzotriazole-based light stabilizers such as 2-(5-methyl-2-hydroxyphenyl)benzotriazole, 2-(3-t-butyl-5-methyl-2-hydroxyphenyl)-5-chlorobenzotriazole; and hindered amine-based light stabilizers such as bis(2,2,6,6-tetramethyl-4-piperidine)sebacate, and poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}]. The content of the light stabilizer is not particularly limited, and is preferably 5,000 ppm or less, more preferably 4,000 ppm or less, further preferably 3,000 ppm or less. Alternatively, the light stabilizer may not be used.

The content of additives contained in the polyethylene powder of the present embodiment can be obtained by extracting the additives in the polyethylene powder by Soxhlet extraction using tetrahydrofuran (THF) for 6 hours, and separating and quantitatively determining the obtained extract by liquid chromatography.

In the polyethylene powder of the present embodiment, a polyethylene different in the viscosity average molecular weight, and the molecular weight distribution may be blended, or another resin such as a low density polyethylene, a linear low density polyethylene, polypropylene, or polystyrene may be blended.

The polyethylene powder of the present embodiment can be processed into a pellet form, in addition to a powder form, for suitable use.

[Formed product]

The polyethylene powder of the present embodiment can be made into a formed product by various processing methods, and the formed product of the present embodiment may be used in various applications.

The formed product of the present embodiment can be produced by forming the polyethylene powder of the present embodiment. Examples of a forming method include an extrusion method, a press forming method, and a method for sintering the polyethylene powder. The examples also include solid forming methods such as cutting work after the powder is brought into a solid state.

Since a formed product of the present embodiment is excellent in strength and dimensional accuracy and is also excellent in heat resistance, the formed product can be suitably used as a microporous membrane, a fiber, or a sheet-like or block-like formed product.

Specific use examples include a separator for a secondary battery, particularly a lithium ion secondary battery separator, a lead-acid storage battery separator, and a high-strength fiber.

Besides, owing to features of the ultrahigh molecular weight polyethylene, that is, excellent characteristics of wear resistance, high slidability, high strength and high impact resistance, the polyethylene can be used, through forming in a solid form after the polyethylene is brought into a solid state, such as extrusion forming, press forming, or cutting work, as a gear, a roll, a curtain rail, a rail for a pachinko ball, a lining sheet of a storage silo for grain, a slidability imparting coating for a rubber product, a ski plate and a ski sole, and a lining material of heavy equipment such as a truck and a power shovel.

Besides, a formed product obtained by sintering the polyethylene powder of the present embodiment can be used as, for example, a filter, a dust trapping material, or a suction-conveying sheet.

Examples

Hereinbelow, the present embodiment will now be described in detail by way of specific examples and comparative examples, and it is noted that the present embodiment is not limited to the following examples and comparative examples.

Various physical properties were measured by methods shown below.

[Methods for Measuring Various Characteristics and Physical Properties]

(1) Average Particle Size

Into a 200 mL container, 100 g of a polyethylene powder was weighed, and 1 g of carbon black was added thereto, and the resultant was sufficiently stirred with a spatula.

The stirred polyethylene powder was classified by sieves each having an opening of 300 $\mu$m, 212 $\mu$m, 150 $\mu$m, 106 $\mu$m, 75 $\mu$m, or 53 $\mu$m in compliance with the JIS Z 8801 standard. The particle size corresponding to 50% mass on an integration curve, which was obtained by integrating the mass of the polyethylene powder remaining on each sieve obtained at this point from the side of the smaller opening, was taken as the average particle size.

(2) Viscosity Average Molecular Weight (Mv)

First, 20 mg of the polyethylene powder was added to 20 mL of decalin (decahydronaphthalene), and the resultant was stirred at 150°C for 2 hours for dissolving the polymer to obtain a solution.

The solution was measured for a fall time ($t_s$) between marked lines in a constant temperature bath at 135°C using an Ubbelohde-type viscometer.

Similarly, three solutions containing the polyethylene powder in a different mass were prepared, and the fall times between marked lines were measured.

As a blank, a fall time ($t_b$) between marked lines in the case of decalin alone not containing polyethylene powder was measured.

Reduced viscosities ($\eta_{sp}$/C) of the polyethylene determined in accordance with the following Expression A were plotted to draw a linear equation between a concentration (C) (unit: g/dL) and the reduced viscosity of the polyethylene ($\eta_{sp}$/C), and a limiting viscosity ([$\eta$]) extrapolated to a concentration of 0 was determined.

$$\eta_{sp}/C = (t_s/t_b - 1)/C \text{ (unit: dL/g)} \quad \text{Expression A}$$

Next, the following Expression B and a value of the limiting viscosity ([$\eta$]) determined as described above were used to calculate the viscosity average molecular weight (Mv).

$$Mv = (5.34 \times 10^4) \times [\eta]^{1.49} \quad \text{Expression B}$$

(3) Compressive Strength at Time of 10% Displacement of Particles Having Predetermined Particle Size

A polyethylene powder having a particle size of 60 $\mu$m for compressive strength measurement was classified by sieves each having an opening of 63 $\mu$m or 53 $\mu$m in compliance with the JIS Z 8801 standard. Then, a polyethylene powder having an average value of the long side and the short side of about 60 $\mu$m was sorted out by means of a system microscope BX43 manufactured by OLYMPUS

CORPORATION.

Subsequently, the polyethylene powder having an average value of the long side and the short side of 60 $\mu$m±5$\mu$m was used to measure the compressive strength by means of the optical monitor of a micro compression tester.
Additionally, a polyethylene powder having a particle size of 100 $\mu$m for compressive strength measurement was classified by sieves each having an opening of 106 $\mu$m or 90 $\mu$m, and sorted out in the same manner as for the particle size of 60 $\mu$m mentioned above. Then, a polyethylene powder of 100 $\mu$m±5 $\mu$m was used for compressive strength measurement.
The compressive strength was measured using a micro compression tester MCT-510 manufactured by SHIMADZU CORPORATION in compliance with JIS R 1639-5.
One particle of the polyethylene powder was mounted on the lower sample table, and the particle size thereof was measured under conditions of planer diameter of upper part pressurizing indenter: 200 mm, test force: 490.0 mN, and load speed: 4.842 mN/sec.
The measurement was performed 3 times, and the average value of the measurements was evaluated.
The compressive strength at the time of 10% displacement was calculated by the following expression from the test force at the time of 10% displacement.

$$C(x) = 2.48 \times P/(\pi \times d \times d)$$

C(x): compressive strength at the time of 10% displacement (MPa)
P: test force at the time of 10% displacement of the particle size (N)
d: particle size of polyethylene powder for use in the compression test (mm)

Note that the particle size d was the average value of the long side and the short side of the polyethylene powder.
As described above, the compressive strength at the time of 10% displacement of particles having a particle size of 60 $\mu$m and the compressive strength at the time of 10% displacement of particles having a particle size of 100 $\mu$m were determined. Then "the ratio of the compressive strength at the time of 10% displacement of particles having a particle size of 60 $\mu$m to the compressive strength at the time of 10% displacement of particles having a particle size of 100 $\mu$m" was calculated.

(4) (Content of Particles Having Particle Size More Than 300 $\mu$m)

The content of particles having a particle size of more than 300 $\mu$m was determined as the proportion of particles remaining on the sieves having an opening of 300 $\mu$m or more with respect to the mass of all the particles, in the measurement of the average particle size of (1) above.

(5) Content of Particles Having Particle Size of Less Than 75 $\mu$m.

The content of particles having a particle size of less than 75 $\mu$m was determined as the proportion of particles that had passed through the sieve having an opening of 75 $\mu$m with the respect to the mass of all the particles, in the measurement of the average particle size of (1) above.

(6) Tap Density

The tap density of the polyethylene powder was measured by the method described in JIS K-7370:2000.

(7) Angle of Rupture

The angle of rupture of the polyethylene powder was measured in compliance with JIS R 9301-2-2.

A powder tester (manufactured by HOSOKAWA MICRON CORPORATION, model PT-E) was used. A sieve having an opening of 710 $\mu$m was attached to the apparatus, a glass funnel having an outlet inner diameter of 5 mm was attached below the sieve, and a round table for measurement having a diameter of 80 mm was further attached below the funnel.

Two hundred (200) grams of the polyethylene powder was placed on the sieve, and vibration was applied to the sieve and the glass funnel under conditions of vibration time of 170 seconds, amplitude of 1.5 mm, frequency of 60 Hz, and slow down time of 10 second to allow the polyethylene powder to fall on the center of the round table. The polyethylene powder was caused to fall and pile up until the edge of the round table was completely obscured.

Subsequently, an impact was applied, with a setting of drop height of 160 mm and number of impacts of 3, to the round table to thereby collapse the pile of the polyethylene powder. The angle between normals connecting the highest point of the polyethylene powder and the edge of the round table was measured with a camera to determine an angle of rupture. The measurement was preformed 3 times, and the average value of the measurements was taken as the value of the angle of rupture.

(8) Melting Heat Amount ($\Delta$H1), Melting Peak Tm1 Half Value Width

The melting heat amount $\Delta$H1 of the polyethylene powder was measured using a DSC (manufactured by Perkin Elmer Co., Ltd., trade name: DSC8000).

As a sample, 8 to 10 mg of the polyethylene powder was weighed and placed in an aluminum sample pan. This aluminum sample pan was fitted with an aluminum cover and placed in the differential scanning calorimeter.

After the measurement sample and a reference sample were held at 50°C for 1 minute under nitrogen purge at a flow rate of 20 mL/minute, the temperature was raised at a rate of 10°C/minute to 180°C. The temperature width at the half height of the melting peak (Tm1) height of the melting curve obtained at this point was taken as the half value width of the melting peak.

Additionally, the total heat amount calculated from the melting peak area was divided by the mass of the sample to determine the melting heat amount ($\Delta$H1).

(9) Total Content of Ti and Al

The polyethylene powder was pressure-decomposed using a microwave decomposition apparatus (model ETHOS TC, manufactured by Milestone General K.K.), and the element concentrations of Ti and Al contained in the polyethylene powder were measured by an internal standard method using an ICP-MS (inductively coupled plasma mass spectrometer, model X series X7, manufactured by Thermo Fisher Scientific K.K.) to determine the total content of Ti and Al.

(10) Voids and Forming strain in Formed product

The polyethylene powder was used to form a round rod of 58 mm in diameter using a ram extruder having a cylinder of 60 mm in inner diameter and 1.2 m in length at a cylinder temperature of 240°C and an extrusion pressure of 12 MPa.

This round rod was heated to 90°C and skived so as to have a thickness of 5 mm, and 5 sheets were obtained.

The obtained sheets were each sandwiched between iron plates at 130°C and aged for 0.5 hours, and then the sheets were visually observed for evaluation.

Determination criteria are as follows.

○ The sheet has no void, and no curvature and waviness are observed at the sheet edge.
△ The sheet has no voids, but curvature and waviness are observed at the sheet edge.
X Small voids (white points) are observed in the sheet, and curvature and waviness are observed at the sheet edge.

(11) Variation Width of Membrane Thickness in Length Direction

The membrane thickness of a polyolefin microporous membrane was measured at 50 points with an interval of 30 cm in the length direction at the center of the roll width direction with a contact thickness meter. The difference between the maximum value and the minimum value was taken as the variation width of the thickness with respect to the length direction.

Determination criteria are as follows.

○ The variation width is less than 0.6 $\mu$m.
△ The variation width is 0.6 $\mu$m or more and less than 1.0 $\mu$m.
X The variation width is 1.0 $\mu$m or more.

(12) Unmelted Polymer (Defect) and Stain

An area of 100 m$^2$ of the microporous membrane was divided into 10 equal parts. The 10 sheets were visually observed, the number of 0.3 mm or more unmelted polymer portions (defects) and the number of 1 mm or more stains on the microporous membrane surface, per area of 10 m$^2$, were counted, and each average value was calculated.
Determination criteria are as follows.

○ The number of defects is less than 1 per 10 m$^2$, and no stain is present.
△ The number of defects is 1 or more and less than 3 per 10 m$^2$, and no stain is present.
X The number of defects is 3 or more per 10 m$^2$, and 1 or more stains are present.

[Production Example] Synthesis of Catalyst [Preparation of Supported Metallocene Catalyst Component [A]]

Spherical silica having an average particle size of 8 $\mu$m, a surface area of 700 m$^2$/g, and a pore volume within a particle of 2.1 mL/g was calcined at 500°C for 5 hours under a nitrogen atmosphere for dehydration to obtain dehydrated silica.
An amount of a surface hydroxyl group of the dehydrated silica was 1.85 mmol/g of SiO$_2$.
In an autoclave having a capacity of 1.8 L, 40 g of the dehydrated silica was dispersed in 800 mL of hexane under a nitrogen atmosphere to obtain a slurry. To the obtained slurry, 80 mL of a hexane solution of triethylaluminum (at a concentration of 1 mol/L) was added under stirring with a temperature held at 50°C, followed by stirring for 2 hours to cause a reaction between triethylaluminum and the surface hydroxyl group of the silica, and thus, a component [a] containing triethylaluminum-treated silica and a supernatant in which the surface hydroxyl group of the triethylaluminum-treated silica was capped with the triethylaluminum was obtained.
Thereafter, the supernatant in the obtained reaction mixture was removed by decantation to remove unreacted triethylaluminum remaining in the supernatant.
Then, an appropriate amount of hexane was added thereto to obtain 880 mL of a hexane slurry of the triethylaluminum-treated silica.
Meanwhile, 200 mmol of [(N-t-butylamide)(tetramethyl-$\eta$5-cyclopentadienyl)dimethylsilane]titanium-1,3-pentadiene (hereinafter referred to as the "titanium complex") was dissolved in 1,000 mL of Isopar E [tradename of a hydrocarbon mixture manufactured by Exxon Chemical (USA)], 20 mL of a 1 mol/L hexane solution of AlMg$_6$(C$_2$H$_5$)$_3$(n-C$_4$H$_9$)$_{12}$ synthesized in advance from triethylaluminum and dibutylmagnesium was added to the resultant, and hexane was further added thereto to adjust a titanium complex concentration to 0.1 mol/L, and thus, a component [b] was obtained.
Besides, 5.7 g of bis(hydrogenated tallow alkyl)methylammonium-tris(pentaflurophenyl)(4-hydroxyphenyl)borate (hereinafter referred to as the "borate") was added to and dissolved in 50 mL of toluene to obtain a 100 mmol/L toluene solution of the borate. To the toluene solution of the borate, 5 mL of a 1 mol/L hexane solution of ethoxydiethylaluminum was added at room temperature, and hexane was further added thereto to adjust a borate concentration in the resultant solution to 70 mmol/L. Thereafter, the resultant was stirred at room temperature for 1 hour to obtain a reaction mixture containing the borate.
Forty-six (46) mL of the reaction mixture containing the borate was added to 800 mL of the slurry of the component [a] obtained as described above at 15 to 20°C with stirring to cause the borate to be supported on the silica. In this manner, a slurry of the silica supporting the borate was obtained. Besides, 32 mL of the component [b] obtained as described above was added thereto, followed by stirring for 3 hours to cause a reaction between the titanium complex and the borate. In this manner, a supported metallocene catalyst [A] containing the silica and the supernatant with a catalytically active species formed on the silica (hereinafter also referred to as the solid catalyst component [A]) was obtained.
Thereafter, the supernatant in the obtained reaction mixture was removed by the decantation to remove unreacted triethylaluminum remaining in the supernatant.

(Preparation of Solid Catalyst Component [B])

<(1) Synthesis of Support (B-1)>

An 8 L stainless steel autoclave sufficiently substituted with nitrogen was charged with 1,000 mL of a 2 mol/L hexane solution of hydroxytrichlorosilane, and 2,550 mL (corresponding to 2.68 mol of magnesium) of a hexane solution of an organic magnesium compound represented by a composition formula, $AlMg_5(C_4H_9)_{11}(OC_4H_9)_2$ was added thereto in a dropwise manner over 4 hours while stirring at 65°C, followed by further stirring at 65°C for 1 hour to continue the reaction. After completing the reaction, a supernatant was removed, and the resultant was washed with 1,800 mL of hexane four times. The thus obtained solid (the support (B-1)) was analyzed to find that 8.31 mmol of magnesium was contained per gram of the solid.

<(2) Preparation of Solid Catalyst Component [B]>

To 1,970 mL of a hexane slurry containing 110 g of the support (B-1) described above, 110 mL of a 1 mol/L hexane solution of titanium tetrachloride and 110 mL of a 1 mol/L hexane solution of an organic magnesium compound represented by a composition formula, $AlMg_5(C_4H_9)_{11}(OSiH)_2$ were simultaneously added over 1 hour under stirring at 10°C. After the addition, the reaction was continued at 10°C for 1 hour. After completing the reaction, 1,100 mL of a supernatant was removed and the resultant was washed twice with 1,100 mL of hexane to prepare a solid catalyst component [B].
An amount of titanium contained in 1 g of the solid catalyst component [B] was 0.75 mmol.

(Preparation of Solid Catalyst Component [C])

To an 8 L stainless autoclave sufficiently nitrogen-purged, 1,600 mL of hexane was added. Under stirring at 10°C, 800 mL of a 1 mol/L hexane solution of titanium tetrachloride and 800 mL of a 1 mol/L hexane solution of an organic magnesium compound represented by a composition formula, $AlMg_5(C_4H_9)_{11}(OSiH)_2$ were simultaneously added over 4 hour. After the addition, the temperature was slowly raised, and the reaction was continued at 10°C for 1 hour.
After completing the reaction, 1,600 mL of a supernatant was removed and the resultant was washed five times with 1,600 mL of hexane to prepare a solid catalyst component [C].
An amount of titanium contained in 1 g of the solid catalyst component [C] was 3.05 mmol.

[Example 1]

(Production of Polyethylene)

Hexane, ethylene, hydrogen, and a catalyst were continuously supplied to a 300 L vessel-type polymerization reactor equipped with a stirrer. A polymerization pressure was 0.5 MPa. A polymerization temperature was held at 83°C by jacket cooling. The hexane, as hexane including ethylene dissolved therein obtained by pressurization with ethylene gas to 0.2 MPa in advance, was adjusted to 10°C and supplied from a bottom portion of the polymerization reactor at 40 L/hr.
The solid catalyst component [B] as a catalyst was adjusted to 10°C and added at a rate of 0.2 g/hr from the bottom portion of the polymerization reactor, and triisobutylaluminum as a co-catalyst was added at a rate of 10 mmol/hr also from the bottom portion of the polymerization reactor.
Ethylene other than "the ethylene supplied in a dissolved form in hexane" was supplied from the gas phase portion of the polymerization reactor, and hydrogen was continuously supplied using a pump in a hydrogen concentration of 12 mol% with respect to the total amount of the ethylene supplied from the gas phase portion and the hydrogen.
The catalyst activity was 80,000g-PE/g-solid catalyst component [B], and a polymerization step was performed to obtain a polymerization slurry. A rate of producing polyethylene was 10 kg/hr.
A polymerization slurry was drawn to a flash drum to which nitrogen gas was bubbled at a pressure of 0.05 MPa and a temperature of 60°C continuously so that a level within the polymerization reactor was kept constant, and unreacted ethylene and hydrogen were separated.
Next, the polymerization slurry was continuously fed to a centrifuge so that the level within the polymerization reactor was held constant, and thus, the polyethylene was separated from the other components including the solvent. The content of the solvent and the like at this point with respect to the polyethylene was 45% by mass.
After the content of hexane to polyethylene was adjusted to 90% by mass by spraying the separated polyethylene powder with hexane, the powder was introduced into a dryer. The drying was performed at 90°C under nitrogen blow for 0.5 hours. The content of hexane after the drying in the polyethylene was 2% by mass. Subsequently, drying was performed at 105°C for 1 hour. Note that, in this drying step, the polyethylene powder after polymerization was sprayed with steam for deactivation of the catalyst and the co-catalyst.

To the obtained polyethylene powder, 1,000 ppm calcium stearate (manufactured by Dainichi Chemical Industry Co., Ltd., C60) was added, and the resultant was uniformly mixed using a Henschel mixer.

Subsequently, the polyethylene powder was sieved with a sieve having an opening of 425 μm, and a portion not passing through the sieve was removed to obtain a polyethylene powder.

The viscosity average molecular weight of the polyethylene powder was 213,000 g/mol.

In Table 1, "10$^4$" is denoted by "10^4". The same applied below.

Properties of the obtained polyethylene powder are shown in Table 1.

(Method for Producing Microporous Membrane)

A polyethylene powder mixture was obtained by adding, as an antioxidant, 0.3 parts by mass of pentaerythrityl tetrakis[3-(3,5-di-t-butyl-4-hydroxyphenyl)propionate] to 100 parts by mass of the polyethylene powder, and dry blending the resultant using a tumbler blender.

After substitution with nitrogen, the obtained polyethylene powder mixture was introduced into a twin screw extruder via a feeder under a nitrogen atmosphere. Further 65 parts by mass of liquid paraffin (manufactured by Matsumura Oil Co., Ltd., P-350 (trademark)) was injected into the extruder by side-feeding, and the resultant was kneaded under a 200°C condition. The kneaded product was extruded through a T-die attached at a tip of the extruder, and then solidified by cooling with a cast roll cooled to 25°C to form a gel sheet having a thickness of 1,500 μm.

This gel sheet was stretched by 7 × 7 times at 120°C using a simultaneous biaxial stretching machine to obtain a stretched film. Then, this stretched film was immersed in methylene chloride for removing the liquid paraffin by extraction, and was subjected to drying.

The resultant film was then restretched by 1.2 × 1.2 times, and then heat-treated at 125°C for 20 seconds to obtain a microporous membrane having a thickness of 6 μm.

Additionally, a microporous membrane roll having a width of 1,500 mm and a wound length of 2,300 mm was obtained at a conveying speed of 30 m/minute at the time of winding-up

[Example 2]

In the polymerization step, the hydrogen concentration was set to 10 mol%

A polyethylene powder of Example 2 having a viscosity average molecular weight of 1,014,000 g/mol was obtained by conducting the same procedure as in Example 1 with the other conditions unchanged.

A microporous membrane of Example 2 was obtained by conducting the same procedure as in Example 1.

[Example 3]

In the polymerization step, the polymerization temperature was set to 85°C, the polymerization pressure was set to 0.40 MPa, the solid catalyst component [B] was replaced by the solid catalyst component [C], triisobutylaluminum as a co-catalyst was supplied at a rate of 6 mmol/hr, and the hydrogen concentration was set to 3 mol%.

A polyethylene powder of Example 3 having a viscosity average molecular weight of 2,487,000g/mol was obtained by conducting the same procedure as in Example 1 with the other conditions unchanged.

A microporous membrane of Example 3 was obtained by conducting the same procedure as in Example 1 except that the amount of liquid paraffin injected was 70 parts by mass.

[Example 5]

In the polymerization step, the polymerization temperature was set to 91°C, the polymerization pressure was set to 0.80 MPa, the solid catalyst component [B] was replaced by the solid catalyst component [A], triisobutylaluminum as a co-catalyst was supplied at a rate of 3 mmol/hr, and the hydrogen was set to 1 mol%.

A polyethylene powder of Example 5 having a viscosity average molecular weight of 1,252,000g/mol was obtained by conducting the same procedure as in Example 1 with the other conditions unchanged.

A microporous membrane of Example 5 was obtained by conducting the same procedure as in Example 1.

[Comparative Example 1]

In the polymerization step, the polymerization temperature was set to 66°C, the polymerization pressure was set to 0.25 MPa, and the hydrogen was set to 13 mol%.

A polyethylene powder of Comparative Example 1 having a viscosity average molecular weight of 232,000g/mol was obtained by conducting the same procedure as in Example 1 with the other conditions unchanged.

A microporous membrane of Comparative Example 1 was obtained by conducting the same procedure as in Example 1.

[Comparative Example 2]

In the polymerization step, hexane including ethylene dissolved therein, the solid catalyst component [B], and triisobutylaluminum were supplied respectively at 20 L/hr, 0.1 g/hr, and 6 mmol/hr, the hydrogen concentration with respect to ethylene in the gas phase was set to 7 mol%, and the rate of producing the polyethylene was set to 5 kg/hr.

A polyethylene powder of Comparative Example 2 having a viscosity average molecular weight of 271,000g/mol was obtained by conducting the same procedure as in Example 1 with the other conditions unchanged.

A microporous membrane of Comparative Example 2 was obtained by conducting the same procedure as in Example 1.

[Comparative Example 3]

Hexane, ethylene, hydrogen, and a catalyst were continuously supplied to a 300 L vessel-type polymerization reactor equipped with a stirrer. A polymerization pressure was 0.5 MPa. A polymerization temperature was held at 83°C by jacket cooling. The hexane was supplied from a bottom portion of the polymerization reactor at 20°C and a rate of 40 L/hr.

The solid catalyst component [B] and triisobutylaluminum as a co-catalyst were used.

The solid catalyst component [B] at a rate of 0.2 g/hr and triisobutylaluminum at a rate of 10 mmol/hr were added from the bottom portion of the polymerization reactor.

The polymerization step was conducted while the hydrogen was continuously supplied using a pump so that the hydrogen concentration in ethylene in the gas phase was 12 mol% and the ethylene was supplied from a liquid phase portion of the bottom portion of the polymerization reactor.

A polymerization slurry was drawn to a flash drum at a pressure of 0.05 MPa and a temperature of 70°C continuously so that a level within the polymerization reactor was kept constant, and thus, unreacted ethylene and hydrogen were separated.

Next, the polymerization slurry was continuously fed to a centrifuge so that the level within the polymerization reactor was held constant, and thus, the polyethylene was separated from the other components including the solvent. The content of the solvent and the like at this point with respect to the polyethylene was 47% by mass.

The thus separated polyethylene powder was introduced into a dryer and dried at 105°C for 0.5 hours under nitrogen blow. Note that the content of hexane in the polyethylene at this point was 0.1% by mass.

To the obtained polyethylene powder, 1,000 ppm of calcium stearate (manufactured by Dainichi Chemical Industry Co., Ltd., C60) was added, and the resultant was uniformly mixed using a Henschel mixer.

Subsequently, the polyethylene powder was sieved with a sieve having an opening of 425 $\mu$m, and a portion not passing through the sieve was removed to obtain a polyethylene powder.

The viscosity average molecular weight of the polyethylene powder was 228,000g/mol.

A microporous membrane of Comparative Example 3 was obtained by conducting the same procedure as in Example 1.

[Table 1]

| | | Example 1 | Example 2 | Example 3 | Example 5 | Comparative Example 1 | Comparative Example 2 | Comparative Example 3 |
|---|---|---|---|---|---|---|---|---|
| Viscosity average molecular weight (Mv) $\times 10^4$ | g/mol | 21.3 | 101.4 | 248.7 | 125.2 | 23.2 | 27.1 | 22.8 |
| Average particle size | μm | 97 | 109 | 125 | 76 | 63 | 100 | 97 |
| Ratio of the compressive strength at the time of 10% displacement of particles having a particle size of 60 μm to that of particles having a particle size of 100 μm | Times | 1.9 | 1.7 | 1.6 | 1.4 | 0.9 | 1.1 | 1.1 |
| Compressive strength at the time of 10% displacement of particles having a particle size of 60 μm | MPa | 9.2 | 7.9 | 6.2 | 5.3 | 4.3 | 5.6 | 4.5 |
| Content of particles having a particle size of more than 300 μm | % by mass | 0.9 | 1.7 | 1.5 | 0.3 | 0.7 | 0.6 | 4.2 |
| Content of particles having a particle size of less than 75 μm | % by mass | 3.5 | 1.5 | 0.6 | 6.3 | 30.5 | 3.1 | 7.5 |
| Tap density | g/cm3 | 0.57 | 0.56 | 0.56 | 0.51 | 0.54 | 0.48 | 0.48 |
| Angle of rupture | ° | 9.2 | 8.9 | 9.3 | 10.5 | 13.8 | 12.6 | 14.7 |
| Melting heat amount △H1 | J/g | 215 | 215 | 214 | 210 | 225 | 216 | 209 |
| Tm1 half value width | °C | 5.3 | 5.1 | 5.2 | 4.2 | 5.8 | 6.0 | 6.1 |
| Total content of Ti and Al | ppm | 2.2 | 1.5 | 1.8 | 5.6 | 0.5 | 13 | 2.0 |
| Void and forming strain in formed product | - | ○ | ○ | ○ | ○ | X | X | X |
| Variation width of membrane thickness in the length direction | - | ○ | ○ | ○ | △ | X | X | X |
| Unmelted polymer and stain | - | ○ | ○ | ○ | ○ | X | X | X |

EP 3 650 475 B1

21

In Examples 1 to 3 and 5, it was able to inhibit the void and forming strain in the formed product.

In the step of dissolving the powder in a solvent such as liquid paraffin, it was possible to inhibit generation of masses of the polyethylene powder, to inhibit variations of the extruding torque or discharge rate, and to obtain a formed product having neither unmelted polymer nor stain.

In Examples 1 to 3 and 5, it was possible to obtain a microporous membrane and a formed product that is easy to handle, excellent in processability, and excellent in strength and dimensional accuracy.

Industrial Applicability

The polyethylene powder of the present invention has industrial applicability as materials such as various films, sheets, microporous membranes, fibers, foamed products, and pipes.

**Claims**

1. A polyethylene powder having an average particle size of 70 $\mu$m or more and less than 150 $\mu$m wherein the average particle size is measured by the method described in paragraph [0042] of the description, wherein a compressive strength at a time of 10% displacement of particles having a particle size of 60 $\mu$m is 1.2 times or more and less than 2.5 times based on a compressive strength at a time of 10% displacement of particles having a particle size of 100 $\mu$m, wherein the particles having a particle size of 60 $\mu$m have an average value of the long side and the short side of 60 $\mu$m$\pm$5$\mu$m, wherein the particles having a particle size of 100 $\mu$m have an average value of the long side and the short side of 100 $\mu$m$\pm$5$\mu$m, wherein the compressive strength is determined from the average of three measurements obtained using a micro compression tester, and wherein the compressive strength is calculated in accordance with the following expression:

$$C(x) = 2.48 \times P/(\pi \times d \times d)$$

   C(x): compressive strength at the time of 10% displacement (MPa)
   P: test force at the time of 10% displacement of the particle size (N)
   d: particle size of polyethylene powder for use in the compression test (mm).

2. The polyethylene powder according to claim 1, having a viscosity average molecular weight (Mv) of 100,000 or more and 4,000,000 or less, wherein the viscosity average molecular weight (Mv) is measured by the method described in paragraph [0043] of the description.

3. The polyethylene powder according to claim 1 or 2, wherein the compressive strength at the time of 10% displacement of particles having a particle size of 60 $\mu$m is 5.0 MPa or more and less than 15.0 MPa.

4. The polyethylene powder according to any one of claims 1 to 3, wherein

   a content of particles having a particle size of more than 300 $\mu$m is less than 3.0% by mass, wherein the content of particles having a particle size of more than 300 $\mu$m is measured by the method described in paragraph [0045] of the description, and
   a content of particles having a particle size of less than 75 $\mu$m is 0.1% by mass or more and less than 10.0% by mass, wherein the content of particles having a particle size of less than 75 $\mu$m is measured by the method described in paragraph [0046] of the description.

5. The polyethylene powder according to any one of claims 1 to 4, having a tap density of 0.50 g/cm$^3$ or more and 0.65 g/cm$^3$ or less, wherein the tap density is measured by the method described in JIS K-7370:2000.

6. The polyethylene powder according to any one of claims 1 to 5, having an angle of rupture of 5° or more and less than 12°, wherein the angle of rupture is measured in compliance with JIS R 9301-2-2.

7. The polyethylene powder according to any one of claims 1 to 6,

   having a melting heat amount $\Delta$H1 of 210 (J/g) or more and less than 240 (J/g) measured by a differential scanning calorimeter (DSC) and
having a half value width of a melting peak Tm1 on a melting curve determined with a differential scanning calorimeter of 2.0°C or more and less than 6.0°C.

8. The polyethylene powder according to any one of claims 1 to 7, having a total content of Ti and Al of 1 ppm or more and 10 ppm or less, wherein the total content of Ti and Al measured by the method described in paragraph [0050] of the description.

9. A formed product of the polyethylene powder according to any one of claims 1 to 8.

10. The formed product according to claim 9, being a microporous membrane.


**Patentansprüche**

1. Polyethylenpulver mit einer durchschnittlichen Partikelgröße von 70 µm oder mehr und weniger als 150 µm, wobei die durchschnittliche Partikelgröße nach dem in Absatz [0042] der Beschreibung beschriebenen Verfahren gemessen wird, wobei
eine Kompressionsfestigkeit zur Zeit von 10 % Verschiebung von Partikeln mit einer Partikelgröße von 60 pm das 1,2-fache oder mehr und weniger als das 2,5-fache ist, bezogen auf eine Kompressionsfestigkeit zu einer Zeit von 10 % Verschiebung von Partikeln mit einer Partikelgröße von 100 µm, wobei die Partikel mit einer Partikelgröße von 60 µm einen Durchschnittswert der langen Seite und der kurzen Seite von 60 µm ± 5 µm haben, wobei die Partikel mit einer Partikelgröße von 100 pm einen durchschnittlichen Wert der langen Seite und der kurzen Seite von 100 µm ± 5 µm haben, wobei die Kompressionsfestigkeit aus dem Durchschnitt von drei Messungen bestimmt wird, die unter Verwendung eines Mikrokompressionstestgeräts erhalten werden, und wobei die Kompressionsfestigkeit gemäß dem folgenden Ausdruck berechnet wird:

$$C(x) = 2{,}48 \times P/ (\pi \times d \times d)$$

C(x): Kompressionsfestigkeit zur Zeit von 10 % Verschiebung (MPa)
P: Testkraft zur Zeit von 10 % Verschiebung der Partikelgröße (N)
d: Partikelgröße von Polyethylenpulver zur Verwendung im Kompressionstest (mm).

2. Polyethylenpulver nach Anspruch 1 mit einem durchschnittlichen Molekulargewicht (Viskositätsmittel) (Mv) von 100.000 oder mehr und 4.000.000 oder weniger,
wobei das durchschnittliche Molekulargewicht (Viskositätsmittel) (Mv) nach dem in Absatz [0043] der Beschreibung beschriebenen Verfahren gemessen wird.

3. Polyethylenpulver nach Anspruch 1 oder 2, wobei die Kompressionsfestigkeit zur Zeit von 10 % Verschiebung von Partikeln mit einer Partikelgröße von 60 pm 5,0 MPa oder mehr und weniger als 15,0 MPa ist.

4. Polyethylenpulver nach einem der Ansprüche 1 bis 3, wobei

ein Gehalt an Partikeln mit einer Partikelgröße von mehr als 300 pm kleiner als 3,0 Massen% ist, wobei der Gehalt an Partikeln mit einer Partikelgröße von mehr als 300 pm nach dem in Absatz [0045] der Beschreibung beschriebenen Verfahren gemessen wird, und
ein Gehalt an Partikeln mit einer Partikelgröße von weniger als 75 pm 0,1 Massen% oder mehr und weniger als 10,0 Massen% ist, wobei der Gehalt an Partikeln mit einer Partikelgröße von weniger als 75 pm nach dem in Absatz [0046] der Beschreibung beschriebenen Verfahren gemessen wird.

5. Polyethylenpulver nach einem der Ansprüche 1 bis 4 mit einer Klopfdichte von 0,50 g/cm³ oder mehr und 0,65 g/cm³ oder weniger, wobei die Klopfdichte nach dem in JIS K-7370:2000 beschriebenen Verfahren gemessen wird.

6. Polyethylenpulver nach einem der Ansprüche 1 bis 5 mit einem Bruchwinkel von 5° oder mehr und weniger als 12°, wobei der Bruchwinkel gemäß JIS R 9301-2-2 gemessen wird.

7. Polyethylenpulver nach einem der Ansprüche 1 bis 6

mit einer Schmelzwärmemenge ΔH1 von 210 (J/g) oder mehr und weniger als 240 (J/g), gemessen mit einem Differentialscanningkalorimeter (DSC) und
mit einer Halbwertsbreite eines Schmelzpeaks Tm1 auf einer Schmelzkurve, die mit einem Differentialscanningkalorimeter bestimmt wurde, von 2,0 °C oder mehr und weniger als 6,0 °C.

8. Polyethylenpulver nach einem der Ansprüche 1 bis 7 mit einem Gesamtgehalt an Ti und Al von 1 ppm oder mehr und 10 ppm oder weniger, wobei der Gesamtgehalt an Ti und Al nach dem in Absatz [0050] der Beschreibung beschriebenen Verfahren gemessen wird.

9. Formprodukt aus dem Polyethylenpulver gemäß einem der Ansprüche 1 bis 8.

10. Formprodukt nach Anspruch 9, das eine mikroporöse Membran ist.

**Revendications**

1. Poudre de polyéthylène possédant une taille moyenne de particule de 70 pm ou plus et de moins de 150 μm, la taille moyenne de particule étant mesurée par le procédé décrit dans le paragraphe [0042] de la description, une résistance à la compression à un moment de 10 % de déplacement de particules possédant une taille de particule de 60 μm étant 1,2 fois ou plus et moins de 2,5 fois sur la base d'une résistance à la compression à un moment de 10 % de déplacement de particules possédant une taille de particule de 100 μm, les particules possédant une taille de particule de 60 pm possédant une valeur moyenne du côté long et du côté court de 60 μm ± 5 μm, les particules possédant une taille de particule de 100 pm possédant une valeur moyenne du côté long et du côté court de 100 pm ± 5 μm, la résistance à la compression étant déterminée à partir de la moyenne de trois mesures obtenues en utilisant un appareil de test de micro compression, et la résistance à la compression étant calculée conformément à l'expression suivante :

$$C(x) = 2,48 \times P/(\pi \times d \times d)$$

C(x) : résistance à la compression au moment de 10 % de déplacement (MPa)
P : force de test au moment de 10 % de déplacement de la taille de particule (N)
d : taille de particule de poudre de polyéthylène pour une utilisation dans le test de compression (mm) .

2. Poudre de polyéthylène selon la revendication 1, possédant un poids moléculaire moyen en viscosité (Mv) de 100 000 ou plus et 4 000 000 ou moins,
le poids moléculaire moyen en viscosité (Mv) étant mesuré par le procédé décrit dans le paragraphe [0043] de la description.

3. Poudre de polyéthylène selon la revendication 1 ou 2, la résistance à la compression au moment de 10 % de déplacement de particules possédant une taille de particule de 60 pm étant de 5,0 MPa ou plus et moins de 15,0 MPa.

4. Poudre de polyéthylène selon l'une quelconque des revendications 1 à 3,

une teneur de particules possédant une taille de particule de plus de 300 pm étant inférieure à 3,0 % en masse, la teneur de particules possédant une taille de particule de plus de 300 pm étant mesurée par le procédé décrit dans le paragraphe [0045] de la description, et
une teneur de particules possédant une taille de particule de moins de 75 pm étant de 0,1 % en masse ou plus et moins de 10,0 % en masse, la teneur de particules possédant une taille de particule de moins de 75 pm étant mesurée par le procédé décrit dans le paragraphe [0046] de la description.

5. Poudre de polyéthylène selon l'une quelconque des revendications 1 à 4, possédant une densité après tassement de 0,50 g/cm³ ou plus et 0,65 g/cm³ ou moins, la densité après tassement étant mesurée par le procédé décrit dans la norme JIS K-7370:2000.

6. Poudre de polyéthylène selon l'une quelconque des revendications 1 à 5, possédant un angle de rupture de 5° ou plus et moins de 12°, l'angle de rupture étant mesuré conformément à la norme JIS R 9301-2-2.

**7.** Poudre de polyéthylène selon l'une quelconque des revendications 1 à 6,

possédant une quantité de chaleur de fusion ΔH1 de 210 (J/g) ou plus et moins de 240 (J/g) mesurée par un calorimètre différentiel à balayage (DSC) et
possédant une largeur à mi-hauteur d'un pic de fusion Tm1 sur une courbe de fusion déterminée avec un calorimètre différentiel à balayage de 2,0 °C ou plus et moins de 6,0 °C.

**8.** Poudre de polyéthylène selon l'une quelconque des revendications 1 à 7, possédant une teneur totale de Ti et Al de 1 ppm ou plus et 10 ppm ou moins, la teneur totale de Ti et Al étant mesurée par le procédé décrit dans le paragraphe [0050] de la description.

**9.** Produit formé de la poudre de polyéthylène selon l'une quelconque des revendications 1 à 8.

**10.** Produit formé selon la revendication 9, qui est une membrane microporeuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015299903 A1
- EP 3279225 A1
- JP 2017141312 A
- JP 2015140386 A
- JP 5767202 B
- JP 2006273977 A
- JP 4868853 B
- DE 3127133